(19) **Europäisches Patentamt / European Patent Office / Office européen des brevets**

(11) **EP 4 557 564 A1**

(12) # EUROPEAN PATENT APPLICATION

(43) Date of publication:
**21.05.2025 Bulletin 2025/21**

(21) Application number: **24177613.7**

(22) Date of filing: **23.05.2024**

(51) International Patent Classification (IPC):
*H02J 7/00* (2006.01)     *H01M 10/44* (2006.01)

(52) Cooperative Patent Classification (CPC):
**H02J 7/0018; H01M 10/441; H02J 7/00712**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.11.2023 CN 202311544331**

(71) Applicant: **Getac Technology Corporation
New Taipei City 221009 (TW)**

(72) Inventors:
• **YU, Chien-Pang
11568 Taipei City (TW)**
• **WANG, Chun-Chi
11568 Taipei City (TW)**

(74) Representative: **Viering, Jentschura & Partner
mbB
Patent- und Rechtsanwälte
Am Brauhaus 8
01099 Dresden (DE)**

(54) **CHARGING METHOD AND POWER SYSTEM**

(57) A charging method and a power system (1) are provided. The power system (1) includes a plurality of batteries (11_1 to 11_n), a plurality of charging integrated circuits (13_1 to 13_n), and a processor (15). The plurality of charging integrated circuits (13_1 to 13_n) are coupled to the plurality of batteries (11_1 to 11_n), respectively. The charging method is performed by the processor (15), and includes: obtaining a plurality of remaining capacities of the plurality of batteries (11_1 to 11_n), respectively; selecting a battery from the plurality of batteries (11_1 to 11_n) that is lowest in remaining capacity as a target battery, and using a charging integrated circuit of the plurality of charging integrated circuits (13_1 to 13_n) that is coupled to the target battery as a target charging integrated circuit; and configuring the target charging integrated circuit to charge the target battery according to a first total power, and configuring each of the plurality of charging integrated circuits other than the target charging integrated circuit to charge a corresponding one of the plurality of batteries (11_1 to 11_n) according to a second total power that is less than the first total power.

FIG. 2

EP 4 557 564 A1

**Description**

**FIELD OF THE INVENTION**

The present invention relates to a charging method and a power system, and more particularly to a charging method and a power system that are capable of simultaneously charging a plurality of batteries by use of a plurality of charging integrated circuits (IC).

**BACKGROUND OF THE INVENTION**

A conventional power system includes a plurality of chargeable batteries. In a conventional charging method and the conventional power system, these batteries are usually charged one-by-one in turn. However, in order to satisfy the technical requirement of simultaneously charging more than one battery, alternative solutions are urgently needed to improve on the conventional charging method and the conventional power system.

**SUMMARY OF THE INVENTION**

In response to the above-referenced technical inadequacy, the present invention provides a charging method and a power system that are capable of simultaneously charging a plurality of batteries by use of a plurality of charging integrated circuits.

In order to solve the above-mentioned problem, one of the technical aspects adopted by the present invention is to provide a charging method. The charging method is applicable to a power system that includes a plurality of batteries, a plurality of charging integrated circuits, and a processor. The plurality of charging integrated circuits are coupled to the plurality of batteries, respectively. The charging method is performed by the processor, and includes: obtaining a plurality of remaining capacities of the plurality of batteries, respectively; selecting a battery from the plurality of batteries that is lowest in remaining capacity as a target battery, and using a charging integrated circuit of the plurality of charging integrated circuits that is coupled to the target battery as a target charging integrated circuit; and configuring the target charging integrated circuit to charge the target battery according to a first total power, and configuring each of the plurality of charging integrated circuits other than the target charging integrated circuit to charge a corresponding one of the plurality of batteries according to a second total power that is less than the first total power.

In order to solve the above-mentioned problem, another one of the technical aspects adopted by the present invention is to provide a power system. The power system includes a plurality of batteries, a plurality of charging integrated circuits, and a processor. The plurality of charging integrated circuits are coupled to the plurality of batteries, respectively. The processor is coupled to the charging integrated circuits, and is configured to perform processes of: obtaining a plurality of remaining capacities of the plurality of batteries, respectively; selecting a battery from the plurality of batteries that is lowest in remaining capacity as a target battery, and using a charging integrated circuit of the plurality of charging integrated circuits that is coupled to the target battery as a target charging integrated circuit; and configuring the target charging integrated circuit to charge the target battery according to a first total power, and configuring each of the plurality of charging integrated circuits other than the target charging integrated circuit to charge a corresponding one of the plurality of batteries according to a second total power that is less than the first total power.

These and other aspects of the present invention will become apparent from the following description of the embodiment taken in conjunction with the following drawings and their captions, although variations and modifications therein may be affected without departing from the spirit and scope of the novel concepts of the invention.

**BRIEF DESCRIPTION OF THE DRAWINGS**

The described embodiments may be better understood by reference to the following description and the accompanying drawings, in which:

FIG. 1 is a functional block diagram of a power system according to an embodiment of the present invention; and
FIG. 2 is a flowchart of a charging method according to the embodiment of the present invention.

**DETAILED DESCRIPTION OF THE EXEMPLARY EMBODIMENTS**

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

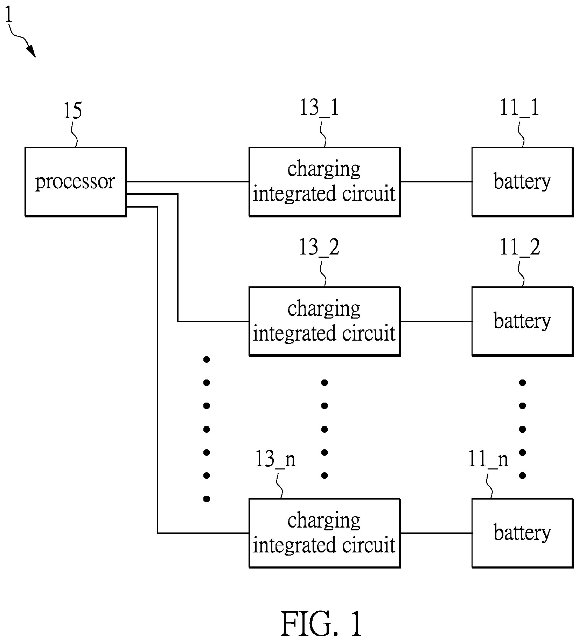

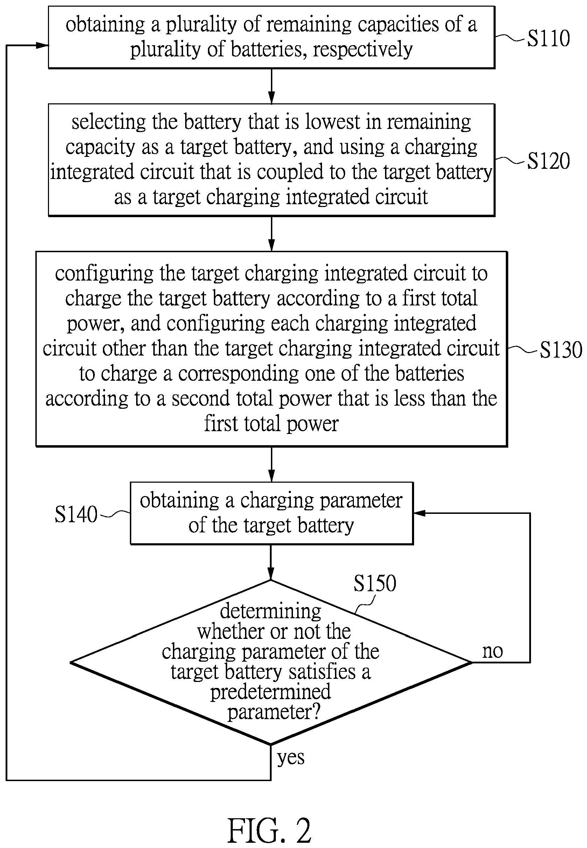

Reference is made to FIG. 1 and FIG. 2. Referring to FIG. 1, a power system 1 of the present embodiment includes a plurality of batteries 11_1 to 11_n, a plurality of charging integrated circuits 13_1 to 13_n, and a processor 15. Here, n is an integer greater than one. The batteries 11_1 to 11_n are all chargeable batteries, each of which can include at least one battery unit. However, a specific implementation of each battery is not limited in the present invention. The charging integrated circuits 13_1 to 13_n are coupled to the batteries 11_1 to 11_n, respectively. Each charging integrated circuit can include an alternating current to direct current (AC to DC) power convertor, and has buck-boost and voltage regulation functions. Similarly, a specific implementation of each charging integrated circuit is also not limited in the present invention.

In the present embodiment, the charging integrated circuits 13_1 to 13_n can also be coupled to a power supply (e.g., an AC adapter, but not shown in FIG. 1), and are configured to charge the batteries 11_1 to 11_n. In addition, the processor 15 can be implemented by cooperation of hardware (e.g., a central processor and a memory), software, and/or firmware. However, a specific implementation of the processor 15 is not limited in the present invention. The processor 15 is coupled to the charging integrated circuits 13_1 to 13_n, and is configured to perform a charging method of the present embodiment. As shown in FIG. 2, the charging method of the present embodiment includes the following processes.

Step S110 includes: obtaining a plurality of remaining capacities of the batteries, respectively.

Specifically, the remaining capacity of each battery can be represented by a state of charge (SOC) in percentage form. Through the charging integrated circuits 13_1 to 13_n, the processor 15 is capable of reading gauge data of the batteries 11_1 to 11_n. In addition, the gauge data of each battery includes its state of charge.

Step S 120 includes: selecting the battery that is lowest in remaining capacity as a target battery, and using the charging integrated circuit that is coupled to the target battery as a target charging integrated circuit.

Step S 130 includes: configuring the target charging integrated circuit to charge the target battery according to a first total power, and configuring each of the charging integrated circuits other than the target charging integrated circuit to charge a corresponding one of the batteries according to a second total power that is less than the first total power.

For example, in response to the battery 11_1 having a lowest remaining capacity at this time, the processor 15 selects the battery 11_1 as the target battery, and the charging integrated circuit 13_1 that is coupled to the battery 11_1 is used as the target charging integrated circuit. Then, the charging integrated circuit 13_1 is configured by the processor 15 to charge the battery 11_1 according to the first total power (not shown in FIG. 1), and each of the charging integrated circuits other than the charging integrated circuit 13_1 is configured by the processor 15 to charge the coupled battery according to the second total power (not shown in FIG. 1) that is less than the first total power.

Specifically, each charging integrated circuit can have a total power, and provides a charging current (not shown in FIG. 1) according to the total power, so as to charge the coupled battery. In addition, the processor 15 can be, for example, an embedded controller (EC), but the present invention is not limited thereto. As such, in step S 130, the processor 15 can set the total power of the target charging integrated circuit as the first total power, and set the total power of each of the charging integrated circuits other than the target charging integrated circuit as the second total power that is less than the first total power.

Compared to other charging integrated circuits, the target charging integrated circuit can be configured to provide a maximum charging current for charging the target battery. Accordingly, the remaining capacity of the target battery is significantly increased in comparison with those of other batteries. Moreover, other charging integrated circuits can each be configured to provide a smaller charging current to charge the coupled battery, so as to satisfy the technical requirement of simultaneously charging more than one battery.

Furthermore, the charging integrated circuits 13_1 to 13_n can also be coupled to a system load (not shown in FIG. 1), and the above-mentioned power supply can supply power to the system load through the charging integrated circuits 13_1 to 13_n. Under this circumstance, the first total power can be calculated by the processor 15 based on the following mathematical expression:

$$P1 = (\text{Battery\_Vol} * \text{Charger\_I}) + \text{Sys\_P}.$$

Here, P1 is the first total power, Battery_Vol is a battery voltage of the target battery, Charger_I is the charging current provided to the target battery by the target charging integrated circuit, and Sys_P is a system load power for the system load. It should be noted that (Battery_Vol * Charger_I) is a charging power for the target battery.

In the present embodiment, the processor 15 can also obtain the charging current and the battery voltage of the target battery by reading the gauge data of the target battery, and obtain the system load power for the system load through the charging integrated circuits 13_1 to 13_n. In addition, the first total power minus a preset power equals the second total power.

For example, the preset power can be 5 watts. Based on the above, in step S130, the processor 15 can set the total power of the target charging integrated circuit as P1, and set the total power of each of the charging integrated circuits other than the target charging integrated circuit as (P1 - 5), but the present invention is not limited thereto. However, when the charging integrated circuits are simultaneously used to charge the batteries, imbalance of charging currents may occur.

Specifically, the charging current may vary with the system load. If one of the charging integrated circuits continues to provide the maximum charging current to the coupled battery for an earliest completion of the charging, an overall battery charging time of other batteries will be prolonged due to the charging current varying with the system load. Therefore, in order to improve the imbalance of charging currents and effectively shorten the overall battery charging time, the batteries 11_1 to 11_n and the charging integrated circuits 13_1 to 13_n can be selected in turn as the target battery and the target charging integrated circuit in the charging method and the power system 1 of the present embodiment. As shown in FIG. 2, the charging method of the present embodiment can further include the following processes.

Step S 140 includes: obtaining a charging parameter of the target battery.

Step S150 includes: determining whether or not the charging parameter of the target battery satisfies a predetermined parameter. If yes (i.e., in response to determining that the charging parameter of the target battery satisfies the predetermined parameter), the charging method returns to step S110. If not, the charging method returns to step S140.

In one embodiment of the present invention, the charging parameter of the target battery can be a duration in which the target charging integrated circuit charges the target battery, and the predetermined parameter can be a designated time. Hence, in response to determining that the duration for charging the target battery reaches the designated time, the processor 15 can re-execute the process of obtaining the remaining capacities (step S 110).

The designated time can be, for example, but is not limited to, 10 minutes. As such, after every specific period of time, the processor 15 can once again obtain the remaining capacities of the batteries 11_1 to 11_n, respectively. Subsequent details are the same as those mentioned above, and will not be reiterated herein. On this basis, the processor 15 can in turn select the batteries 11_1 to 11_n and the charging integrated circuits 13_1 to 13_n as the target battery and the target charging integrated circuit, thereby improving the imbalance of charging currents and effectively shortening the overall battery charging time.

In another embodiment of the present invention, the charging parameter of the target battery can be an increased capacity of the target battery during charging, and the predetermined parameter can be a designated capacity. Hence, in response to determining that the increased capacity of the target battery during charging reaches the designated capacity, the processor 15 can re-execute the process of obtaining the remaining capacities (step S110).

Furthermore, the increased capacity and the designated capacity can both be represented in percentage form. For example, the designated capacity can be 10%. As such, each time the remaining capacity of the target battery is increased by 10%, the processor 15 can once again obtain the remaining capacities of the batteries 11_1 to 11_n, respectively. However, the present invention is not limited to this example. Subsequent details are also the same as those mentioned above, and will not be reiterated herein.

[Beneficial Effects of the Embodiment]

In conclusion, in the charging method and the power system provided by the present invention, by virtue of "configuring the target charging integrated circuit to charge the target battery according to the first total power, and configuring each of the charging integrated circuits other than the target charging integrated circuit to charge a corresponding one of the batteries according to the second total power that is less than the first total power," the technical requirement of simultaneously charging more than one battery can be satisfied.

Furthermore, in the charging method and the power system provided by the present invention, the batteries and the charging integrated circuits can also be selected in turn as the target battery and the target charging integrated circuit, so as to improve the imbalance of charging currents and effectively shorten the overall battery charging time.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated. Alternative embodiments will become apparent to those skilled in the art to which the present invention pertains without departing from its spirit and scope.

**Claims**

1. A charging method, wherein the charging method is applicable to a power system (1), the power system (1) includes a plurality of batteries (11_1 to 11_n), a plurality of charging integrated circuits (13_1 to 13_n), and a processor (15), the plurality of charging integrated circuits (13_1 to 13_n) are respectively coupled to the plurality of batteries (11_1 to 11_n), the charging method is performed by the processor (15), and the charging method is **characterized by** comprising:

   obtaining a plurality of remaining capacities of the plurality of batteries (11_1 to 11_n), respectively;
   selecting a battery from the plurality of batteries (11_1 to 11_n) that is lowest in remaining capacity as a target battery, and using a charging integrated circuit of the plurality of charging integrated circuits (13_1 to 13_n) that is coupled to the target battery as a target charging integrated circuit; and
   configuring the target charging integrated circuit to charge the target battery according to a first total power, and configuring each of the plurality of charging integrated circuits other than the target charging integrated circuit to charge a corresponding one of the plurality of batteries (11_1 to 11_n) according to a second total power that is less than the first total power.

2. The charging method according to claim 1, wherein the first total power is calculated based on a mathematical expression of:

$$P1 = (\text{Battery\_Vol} * \text{Charger\_I}) + \text{Sys\_P};$$

   wherein P1 is the first total power, Battery_Vol is a battery voltage of the target battery, Charger_I is a charging current, and Sys_P is a system load power.

3. The charging method according to claim 1, wherein the first total power minus a preset power equals the second total power.

4. The charging method according to claim 1, further comprising:
   re-executing, in response to determining that a duration for charging the target battery reaches a designated time, the process of obtaining the plurality of remaining capacities.

5. The charging method according to claim 1, further comprising:
   re-executing, in response to determining that an increased capacity of the target battery during charging reaches a designated capacity, the process of obtaining the plurality of remaining capacities.

6. A power system (1), **characterized by** comprising:

   a plurality of batteries (11_1 to 11_n);
   a plurality of charging integrated circuits (13_1 to 13_n) coupled to the plurality of batteries (11_1 to 11_n), respectively; and
   a processor (15) coupled to the plurality of charging integrated circuits (13_1 to 13_n), wherein the processor (15) is configured to perform processes of:

   obtaining a plurality of remaining capacities of the plurality of batteries (11_1 to 11_n), respectively;
   selecting a battery from the plurality of batteries (11_1 to 11_n) that is lowest in remaining capacity as a target battery, and using a charging integrated circuit of the plurality of charging integrated circuits (13_1 to 13_n) that is coupled to the target battery as a target charging integrated circuit; and
   configuring the target charging integrated circuit to charge the target battery according to a first total power, and configuring each of the plurality of charging integrated circuits other than the target charging integrated circuit to charge a corresponding one of the plurality of batteries (11_1 to 11_n) according to a second total power that is less than the first total power.

7. The power system (1) according to claim 6, wherein the first total power is calculated based on a mathematical expression of:

$$P1 = (\text{Battery\_Vol} * \text{Charger\_I}) + \text{Sys\_P};$$

wherein P1 is the first total power, Battery_Vol is a battery voltage of the target battery, Charger _I is a charging current, and Sys_P is a system load power.

8. The power system (1) according to claim 6, wherein the first total power minus a preset power equals the second total power.

9. The power system (1) according to claim 6, wherein the processor (15) is further configured to perform a process of: re-executing, in response to determining that a duration for charging the target battery reaches a designated time, the process of obtaining the plurality of remaining capacities.

10. The power system (1) according to claim 6, wherein the processor (15) is further configured to perform a process of: re-executing, in response to determining that an increased capacity of the target battery during charging reaches a designated capacity, the process of obtaining the plurality of remaining capacities.

FIG. 1

obtaining a plurality of remaining capacities of a plurality of batteries, respectively ～S110

selecting the battery that is lowest in remaining capacity as a target battery, and using a charging integrated circuit that is coupled to the target battery as a target charging integrated circuit ～S120

configuring the target charging integrated circuit to charge the target battery according to a first total power, and configuring each charging integrated circuit other than the target charging integrated circuit to charge a corresponding one of the batteries according to a second total power that is less than the first total power ～S130

S140～ obtaining a charging parameter of the target battery

S150 determining whether or not the charging parameter of the target battery satisfies a predetermined parameter?

no

yes

FIG. 2

**Europäisches Patentamt**
**European Patent Office**
**Office européen des brevets**

# EUROPEAN SEARCH REPORT

Application Number

EP 24 17 7613

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/281097 A1 (FIEDLER STEFAN [DE] ET AL) 9 September 2021 (2021-09-09) <br> * paragraph [0005] - paragraph [0048] * <br> * paragraph [0062] - paragraph [0100]; figures 1-3 * | 1-10 | INV. <br> H02J7/00 <br> H01M10/44 |
| X | JP 6 442949 B2 (SUMITOMO ELECTRIC INDUSTRIES) 26 December 2018 (2018-12-26) <br> * paragraph [0010] - paragraph [0034]; figures 1-4 * | 1-10 | |
| X | US 2021/066929 A1 (SUZUKI SHINGO [JP] ET AL) 4 March 2021 (2021-03-04) <br> * paragraph [0018] - paragraph [0052]; figures 1,2 * | 1-10 | |
| A | CN 114 899 925 A (LENOVO BEIJING CO LTD) 12 August 2022 (2022-08-12) <br> * paragraph [0049] - paragraph [0062]; figures 1,2 * <br> & US 2024/006895 A1 (YAN YONGHUA [CN]) 4 January 2024 (2024-01-04) <br> * paragraph [0019] - paragraph [0032]; figures 1,2 * | 1-10 | TECHNICAL FIELDS SEARCHED (IPC) <br><br> H02J <br> H01M |

The present search report has been drawn up for all claims

| Place of search | Date of completion of the search | Examiner |
|---|---|---|
| Munich | 5 November 2024 | Mäki-Mantila, Harri |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 7613

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2024

| Patent document cited in search report | Publication date | Patent family member(s) | Publication date |
|---|---|---|---|
| US 2021281097 A1 | 09-09-2021 | AU 2019301190 A1 | 12-11-2020 |
| | | CN 112438005 A | 02-03-2021 |
| | | CN 118739322 A | 01-10-2024 |
| | | DE 102018211633 A1 | 16-01-2020 |
| | | EP 3821513 A1 | 19-05-2021 |
| | | EP 4224657 A1 | 09-08-2023 |
| | | ES 2950800 T3 | 13-10-2023 |
| | | HR P20230681 T1 | 13-10-2023 |
| | | HU E063209 T2 | 28-01-2024 |
| | | PL 3821513 T3 | 09-10-2023 |
| | | US 2021281097 A1 | 09-09-2021 |
| | | WO 2020011884 A1 | 16-01-2020 |
| JP 6442949 B2 | 26-12-2018 | JP 6442949 B2 | 26-12-2018 |
| | | JP 2016063717 A | 25-04-2016 |
| US 2021066929 A1 | 04-03-2021 | US 2021066929 A1 | 04-03-2021 |
| | | WO 2019145997 A1 | 01-08-2019 |
| CN 114899925 A | 12-08-2022 | CN 114899925 A | 12-08-2022 |
| | | DE 102023108266 A1 | 04-01-2024 |
| | | US 2024006895 A1 | 04-01-2024 |

EPO FORM P0459

For more details about this annex : see Official Journal of the European Patent Office, No. 12/82